(19) Europäisches Patentamt
European Patent Office
Office européen des brevets

(11) **EP 1 761 039 A2**

(12) **EUROPEAN PATENT APPLICATION**

(43) Date of publication:
**07.03.2007 Bulletin 2007/10**

(51) Int Cl.:
***H04N 3/23*** *(2006.01)*

(21) Application number: **06250582.1**

(22) Date of filing: **03.02.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **06.09.2005 KR 2005082788**

(71) Applicant: **LG Electronics Inc.
Yongdungpo-gu
Seoul (KR)**

(72) Inventor: **Bae, Sam Bong
Namhae-gun
Gyeongsangnam-do (KR)**

(74) Representative: **Camp, Ronald et al
Kilburn & Strode
20 Red Lion Street
London WC1R 4PJ (GB)**

(54) **Apparatus and method for correcting image distorsion in display device**

(57) An apparatus for correcting image distortion in a display device and method thereof facilitate enhanced image distortion correction includes a first memory storing at least one interpolation constant; a control unit for generating a predetermined number of image point signals; a device for outputting at least one drive signal, to correct distortion in an image point, by interpolating the input image point signals using the at least one interpolation constant; and at least one switching device for switching a drive control of a corresponding area of the image in response to a corresponding drive signal.

The apparatus facilitates distortion correction in slim line CRT displays of wide deflection angle.

Interpolation information is stored in a Field Programmable Gate Array controlled by an EEPROM, output signals passing via photocouplers.

FIG. 5

**Description**

The present invention relates to an apparatus for correcting image distortion in a display device and method thereof. Although the present invention is suitable for a wide scope of applications, it is particularly suitable for facilitating enhanced image distortion correction in a slim-type television receiver.

As television receivers including a Braun tube (or cathode-ray tube, CRT) become slimmer, i.e., of shallower depth, the deflection angle of the tube increases, which can cause severe image distortion, namely, non-linearity and pincushion effects. For example, the tube of a contemporary slim television receiver achieves an overall depth that is less, such that the deflection angle is greater, than the corresponding characteristics of a general CRT television receiver.

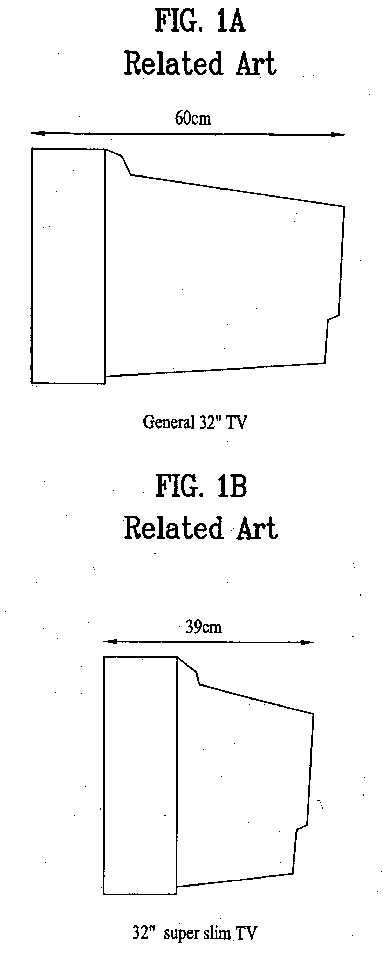

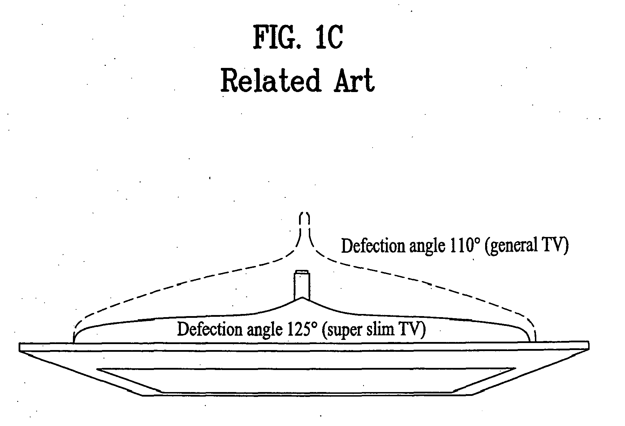

FIGS. 1A and 1B compare the overall depths of a general 32-inch television receiver (60cm) and a contemporary 32-inch "super-slim" television receiver (39cm), while FIG. 1C illustrates the difference in deflection angles between a general CRT television receiver (110°) and a "super-slim" television receiver (125°). Accordingly, image distortion suffers in slimmer television receivers, which have tube depths as much as 20cm less than in general television receivers.

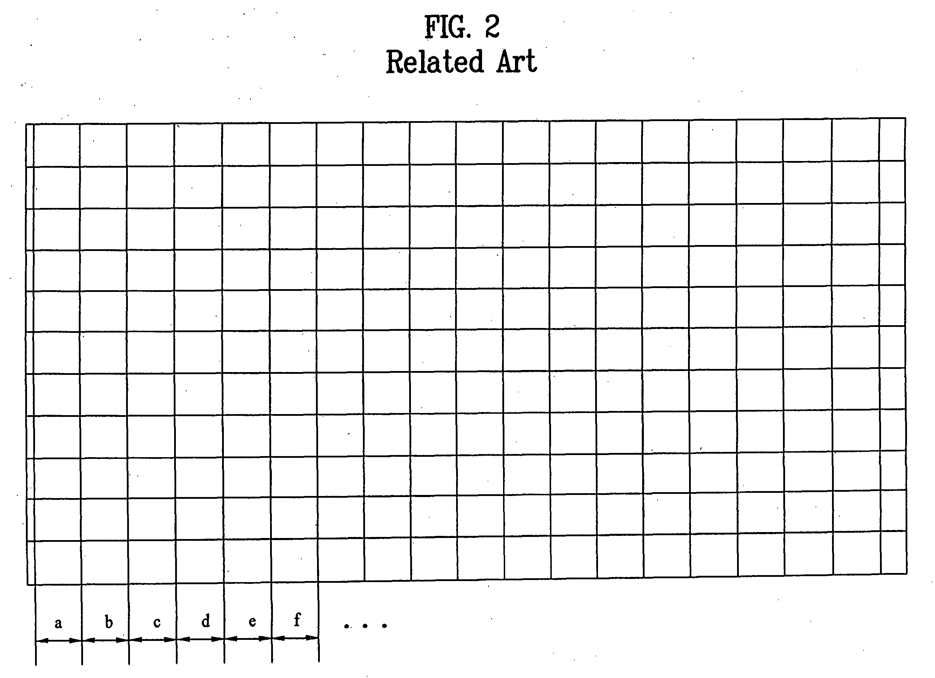

According to FIG. 2, which is representative of an image having a simple crosshatch pattern, where the horizontal divisions along any row should be uniform, that is, $a = b = c = d = e = f = ....$ Here, correction of (horizontal) linearity distortion aims to render equal-width horizontal divisions in the received/displayed image, and correction of pincushion distortion, in which vertical lines are bowed rather than straight, is achieved using an east-west (EW) waveform. Specifically, horizontal image size can be controlled by varying a DC value of the EW waveform, while pincushion effects can be overcome by controlling an AC value of the EW waveform.

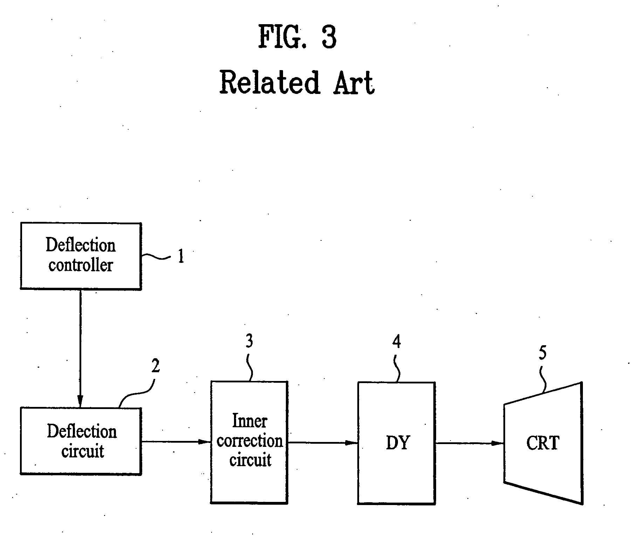

Referring to FIG. 3, a general display device comprises a deflection controller 1 for generating and outputting an EW correction waveform, a deflection circuit 2 for performing vertical and horizontal deflection control according to the EW correction waveform, an inner correction circuit 3 for adjusting image distortion control by the deflection circuit, a deflection yoke (DY) 4, and a cathode-ray tube (CRT) 5. The deflection yoke 4 includes four transistors for respectively driving a corresponding area of the image display, and the inner correction circuit 3 includes a variable resistor for each transistor of the deflection yoke, such that adjusting the value of a variable resistor determines the timing (turn-on time) of the corresponding transistor.

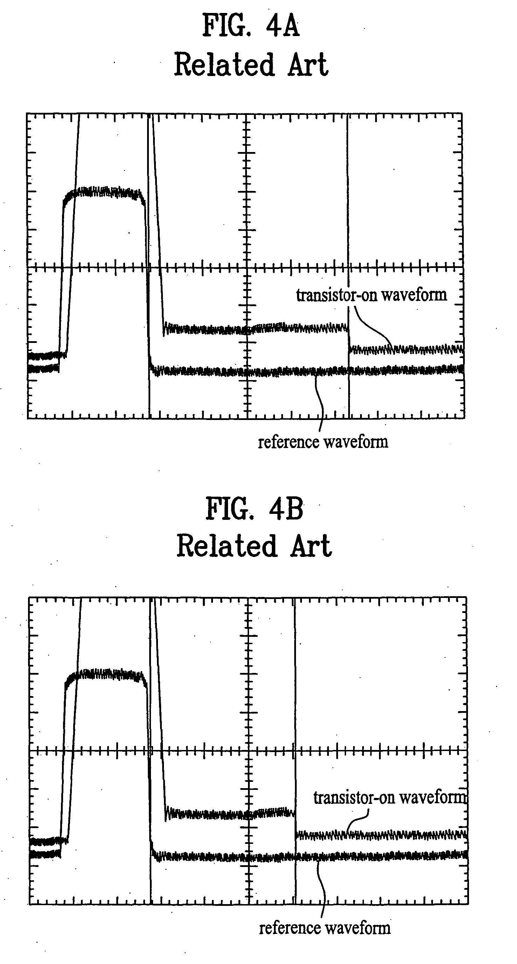

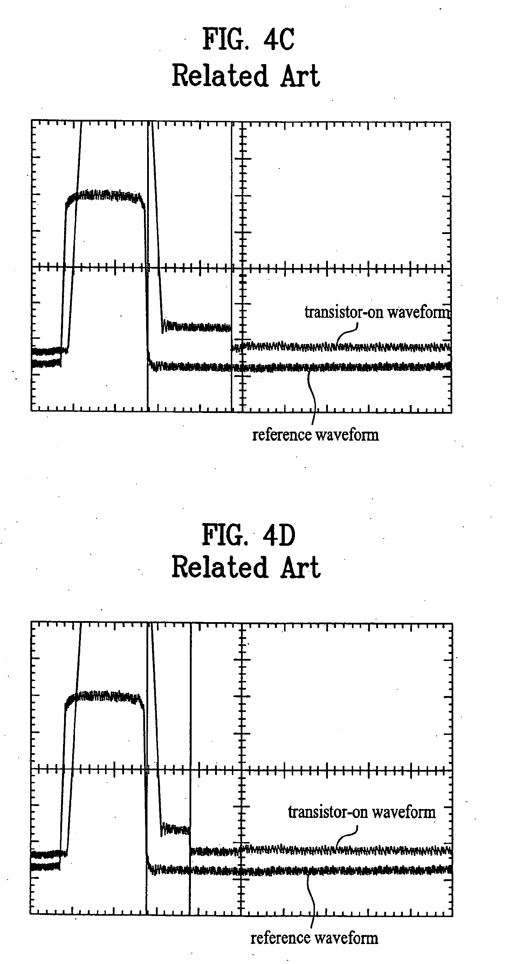

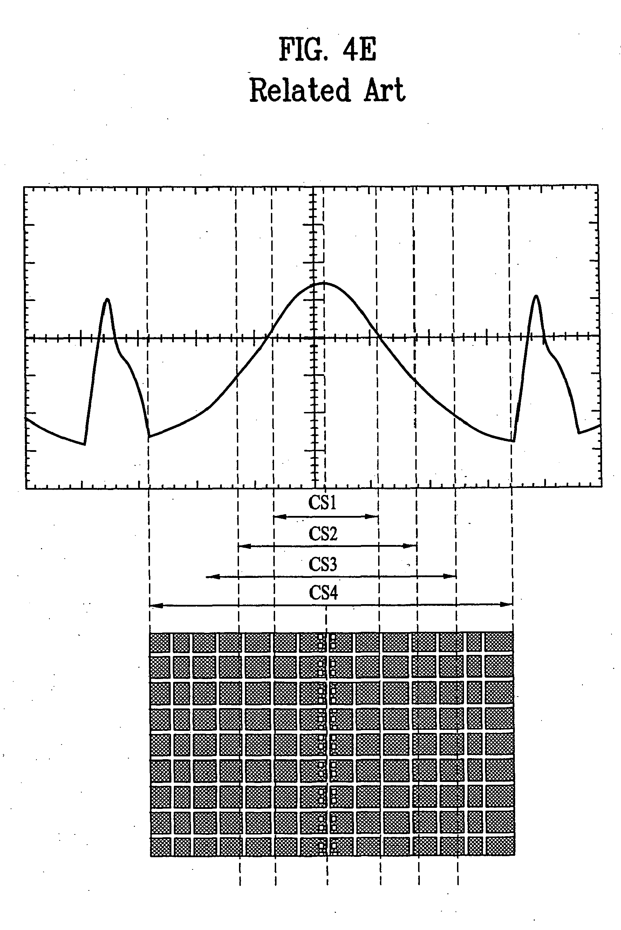

FIGS. 4A-4D illustrate the above adjustment, whereby each graph shows a transistor-on waveform for one of the above four transistors, with each transistor exhibiting a different turn-on time with respect to a reference waveform. FIG. 4E shows the combined effect of four image distortion correction signals CS1-CS4, corresponding to the four transistor turn-on waveforms of FIGS. 4A-4D, which are used in correcting linearity distortion and pincushion distortion.

Although linearity and pincushion corrections can be achieved using a conventional techniques, namely, a linearity coil and EW waveform, such image correction through a single corrective action is impractical for slimmer cathode-ray tubes. Instead, each displayed image is divided into four areas, which are respectively controlled by a switching pulse from one of the transistors, and the correction is performed for each area, which necessitates an interactive adjustment of each transistor's turn-on time. The four variable resistors are included in an inner-pin correction circuit employed for the display device. While pincushion distortion can be corrected using correction waveforms (EW waveforms), linearity correction is carried out by an adjustment of the variable resistors. This adjustment is a complex operation typically performed by a user who manually adjusts the variable resistors mounted on a substrate and, as a result, often leads to an inaccurate image distortion correction of top, bottom, right, and left parts of the image display.

The present invention seeks to provide an improved apparatus for correcting image distortion.

Embodiments of the present invention can provide an apparatus for correcting image distortion in a display device and method thereof, by which enhanced image distortion correction is facilitated.

In accordance with a first aspect of the invention, there is provided an apparatus for correcting image distortion. The apparatus comprises memory storing at least one interpolation constant; device for outputting at least one drive signal, to correct distortion in an image, by interpolating an input image signal using the at least one interpolation constant; and at least one switching device for switching a drive control of a corresponding area of the image in response to a corresponding drive signal.

In accordance with another aspect of the invention, there is provided an apparatus for correcting image distortion. The apparatus comprises a first memory storing at least one interpolation constant; a control unit for generating a predetermined number of image point signals; device for outputting at least one drive signal, to correct distortion in an image point, by interpolating the input image point signals using the at least one interpolation constant; and at least one switching device for switching a drive control of a corresponding area of the image in response to a corresponding drive signal.

In accordance with another aspect of the present invention, there is provided a method of correcting image distortion in a display device provided with memory. The method comprises calculating at least one interpolation constant required for interpolation; storing in memory the at least one interpolation constant; and generating at least one drive signal, to correct distortion in an image, by interpolating at least one input point signal of the image using the at least one interpolation constant.

It is to be understood that both the foregoing general description and the following detailed description of the present invention are exemplary and explanatory and are intended to provide further explanation of the invention as claimed.

Embodiments of the invention will now be described by way of non-limiting example only, with respect to the drawings, in which:

FIG. 1A is a diagram showing the overall length of a general 32-inch television receiver;

FIG. 1B is a diagram showing the overall length of a contemporary 32-inch "super-slim" television receiver;

FIG. 1C is a diagram illustrating the deflection angles of a general CRT television receiver and a "super-slim" television receiver;

FIG. 2 is a diagram of an exemplary image having a crosshatch pattern;

FIG. 3 is a block diagram of a general display device;

FIGS. 4A-4D are a series of graphs of transistor-on waveforms as controlled by the four variable resistors included in an inner-pin correction circuit, each of the four transistors exhibiting a different turn-on time with respect to a reference waveform;

FIG. 4E is a graph of a waveform generated from the waveforms of FIGS. 4A-4D;

FIG. 5 is a block diagram of an apparatus for correcting image distortion in a display device according to an embodiment of the present invention;

FIG. 6 is a detailed block diagram of a drive signal outputting device shown in FIG. 5;

FIGS. 7A-7D are diagrams illustrating the correction of an output video signal to be displayed;

FIG. 8 is an exemplary diagram of linear interpolation;

FIG. 9 is an exemplary diagram of Hermit interpolation;

FIG. 10 is a diagram for explaining a method of correcting linearity distortion and pincushion distortion according to the embodiment of the present invention; and

FIGS. 11A-11C are pictures of actual pincushion effects and correction conditions, including OSD data, where sixteen points are selected for the correction.

Wherever possible, like reference designations will have been used throughout the drawings to refer to the same or similar parts.

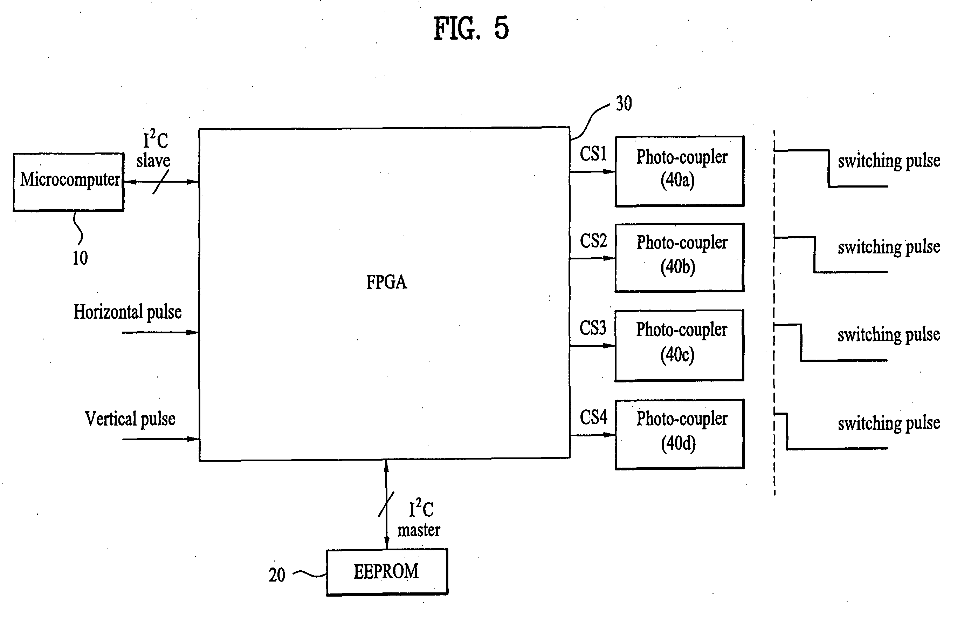

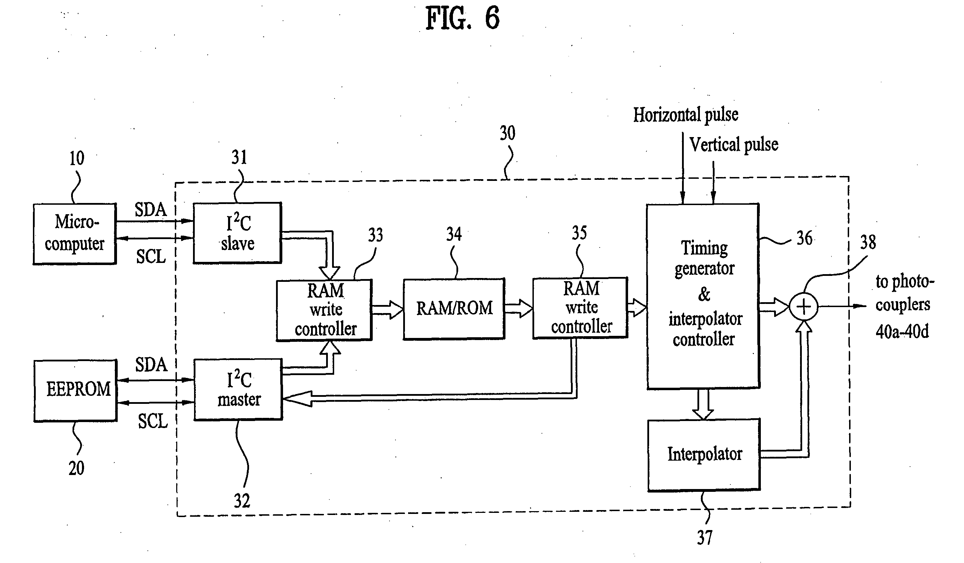

FIG. 5 illustrates an apparatus for correcting image distortion according to the present invention, including a field-programmable gate array (FPGA) as a drive signal outputting device, which is shown in FIG. 6. The apparatus of FIG. 5 is applicable to a slim-type television receiver, so that inaccurate user (i.e., manual) adjustments can be prevented by generating multiple transistor drive signals using a programmable logic device, i.e., the FPGA.

Referring to FIG. 5, the apparatus includes a microcomputer 10 as a control unit for generating a predetermined number of image point signals; an EEPROM 20 as a first memory storing at least one interpolation constant (the number of constants being for sixteen-point adjustment, in the present embodiment); a field-programmable gate array 30 as a device for generating one or more drive signals (four drive signals CS1-CS4, in the present embodiment) to correct distortion in an image; and a plurality of photo-couplers 40a-40d as switching devices for respectively outputting the drive signals, each of which switches a drive control of a corresponding area of each image in response to the corresponding drive signal and are thus equal in number (four, in the present embodiment) to the drive signals. The interpolation constant is a linear interpolation constant or a Hermit interpolation constant, and the image distortion is a pincushion and non-linearity distortion. The image point signals are line signals selected for image distortion correction, and in the present embodiment, there are three or sixteen line signals selected according to an area of each image, though the number of the correction lines can be arbitrarily selected.

In the embodiment, the image is divided into four areas but can be divided into any number of such areas. Hence, the number of drive signals and switching devices may correspond to a number of pulse waveforms and a number of transistors, respectively, equaling the number of area divisions. The transistor may be a CMOS FET or bipolar transistor.

The field-programmable gate array 30 is ASIC-programmed to provide transistor switching pulses for respectively performing parabola controls, and as shown in FIG. 6, includes a slave unit 31 for communicating with the control unit to input the point signals; a master unit 32 for performing read/write operations with respect to the first memory; a first RAM write controller 33 for controlling write operations using data from the slave and master units 31 and 32; a RAM/ROM 34 as a second memory for storing, in table form, the data from the slave and master units by a control of the first RAM write controller 33; a second RAM write controller 35 for controlling the master unit and for controlling write operations using data from the RAM/ROM; a timing generator and interpolator controller 36 for generating a timing signal using input vertical and horizontal (pulse) sync signals and for controlling the interpolation; an interpolator as an arithmetic logic unit for providing a plurality of correction signals CS1-CS4 by performing interpolation on the point signals output by the timing generator and interpolator controller based on the interpolation constants; and an adder 38 for outputting distortion-corrected (final) drive signals by summing the correction signals and the point signals. The correction signals CS1-CS4 correspond to "on" signals of the switching devices, which are in effect adjustment signals acting on the sixteen points.

In the correction apparatus of the present embodiment, at least one interpolation constant necessary for the interpolation is calculated by a manufacturer and stored in a memory of a display device. The point signals of each image, which are input from the control unit 10, are interpolated with the at least one interpolation constant, to generate at least one drive signal enabling a distortion correction of each image. Each drive signal is used in driving the switching device for the corresponding area of the respective images. Thus, the manufacturer can select three or sixteen lines according to image area from among about 540 (the number of lines in one field) scan lines constructing each image, to perform a correction operation based on the selected lines only, i.e., without using all 540 scan lines in performing correction. Meanwhile, the unselected lines between the selected lines are interpolated by the interpolation process to generate the complete correction signal.

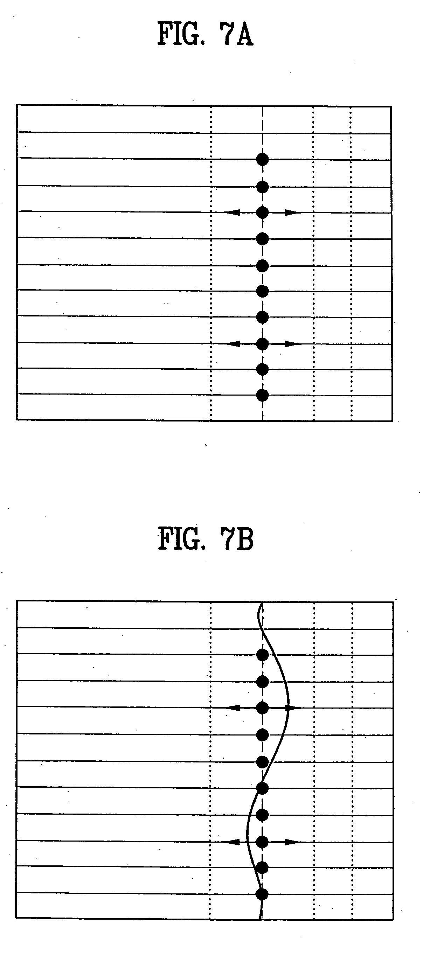

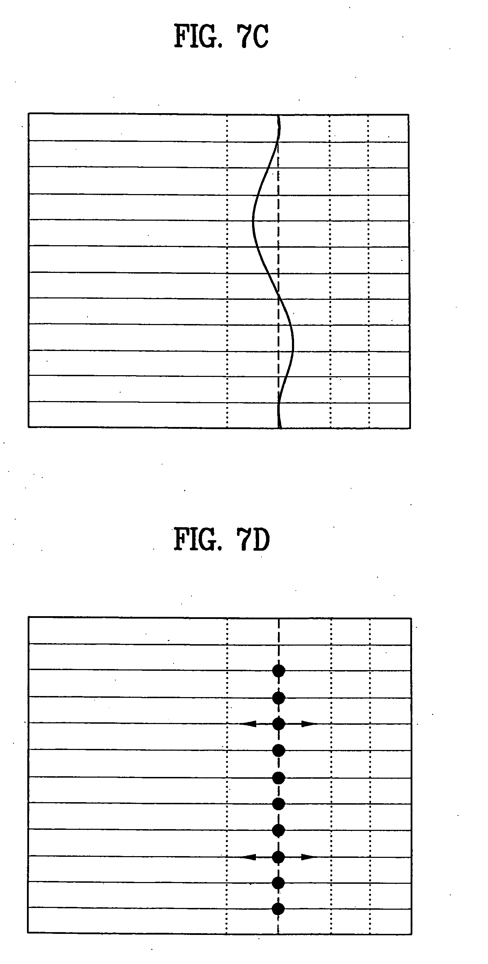

FIGS. 7A-7D diagram an interpolation concept, where FIG. 7A shows an output video signal, FIG. 7B shows the video signal with an uncorrected image, FIG. 7C shows a correction signal from the field-programmable gate array 30, and FIG. 7D shows the ultimately corrected video signal. The correction signal is a signal for correcting linearity distortion and pincushion distortion of the displayed video signal.

The main function of the drive signal outputting device, i.e., the field-programmable gate array 30, is to calculate values of unknown points between the selected points (lines) using several given data, i.e., the three or sixteen selected point signals according to the corresponding area. This calculation process is called interpolation, and the described embodiment of the present invention employs two kinds of interpolation schemes:

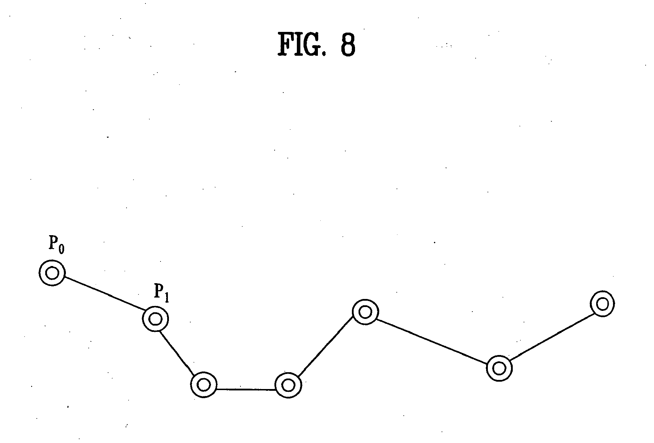

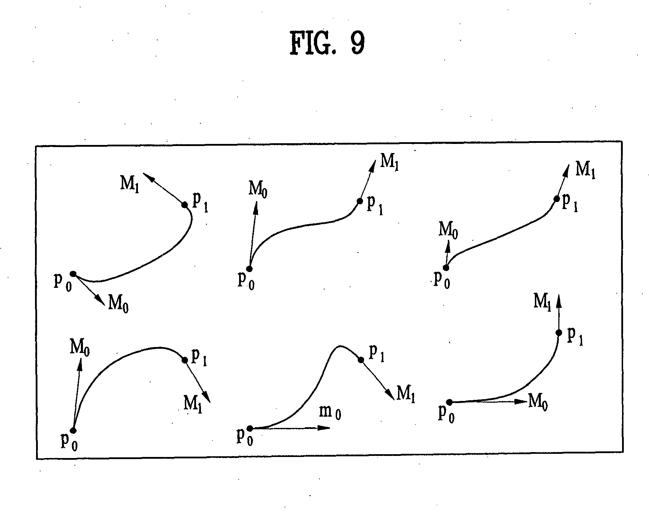

linear interpolation, which is diagramed in FIG. 8, and Hermit interpolation, which is diagramed in FIG. 9. In the linear interpolation of FIG. 8, where first (start) and second (end) points have values of $P_0$ and $P_1$, respectively, the value of a specific point P(t) is found by Equation 1.

$$P(t) = P_0 + t(P_1 - P_0) \hspace{4cm} \text{Equation 1}$$

Linear interpolation is advantageous in terms of implementation but the required degree of quality in the results is difficult. Hermit interpolation, on the other hand, can achieve the required quality of results but application of a tertiary equation as necessary is needed, which complicates implementation. Thus, in the Hermit interpolation of FIG. 9, for tangent components of the start and end points ($P_0$, $P_1$) of $M_0$ and $M_1$, respectively, the value of the specific point P(t) is found by Equation 2.

$$P(t) = P_0(2t^3 - 3t^2 + 1) + M_0(t^3 - 2t^2 + t) + M_1(t^3 - t^2) + P_1(-2t^3 + 3t^2) \hspace{1cm} \text{Equation 2}$$

To perform a Hermit interpolation algorithm, the above maximum tertiary equation should be computed for each line of each image. The difficulty in implementing the tertiary equation with only a logic circuit necessitates that constant values, required for the Hermit interpolation, be previously calculated and stored in the EEPROM 20 (the first memory), such that the Hermit interpolation is performed by reading from the memory the necessary constant values for each line.

For instance, if sixteen points are selected for the interpolation from among 540 points of each image, the sixteen points are interpolated to give the 540 lines of one field. In this case, Hermit interpolation is carried out by Equation 3.

$$\begin{aligned} P(t) \quad &= P_0(2t^3 - 3t^2 + 1) + M_0(t^3 - 2t^2 + t) + M_1(t^3 - t^2) + P_1(-2t^3 + 3t^2) \\ &= P_0(2t^3 - 3t^2 + 1) + (P_1 - P_0)(t^3 - 2t^2 + t) + (P_2 - P_1)(t^3 - t^2) + P_1(-2t^3 + 3t^2) \end{aligned}$$

$$= P_0(t^3-t^2-t+1) + P_1(-2t^3+2t^2+t) - P_2(-t^3+t^2) \qquad \text{Equation 3}$$

where each of $t^3$-$t^2$-t+1, -2$t^3$+2$t^2$+t, and -$t^3$+$t^2$ are constants ($C_0$, $C_1$, $C_2$).

As another example, if three points are selected for the interpolation from among the 540 points of each image, the three points are preferentially interpolated to give sixteen points and are then again interpolated to give 540 lines (points). In this instance, the Hermit interpolation is performed by Equation 4, where the intermediate variables ($M_0$, $M_1$) of Equation 3 are set to zero.

$$P(t) \quad = P_0(2t^3-3t^2+1) + M_0(t^3-2t^2+t) + M_1(t^3-t^2) + P_1(-2t^3+3t^2)$$

$$= P_0(2t^3-3t^2+1) + P_1(-2t^3+3t^2) \qquad \text{Equation 4}$$

where each of 2$t^3$-3$t^2$+1 and -2$t^3$+3$t^2$ are constants ($C_0$, $C_1$).

The constants of Equations 3 and 4 are previously calculated and stored in the EEPROM 20 in a table form.

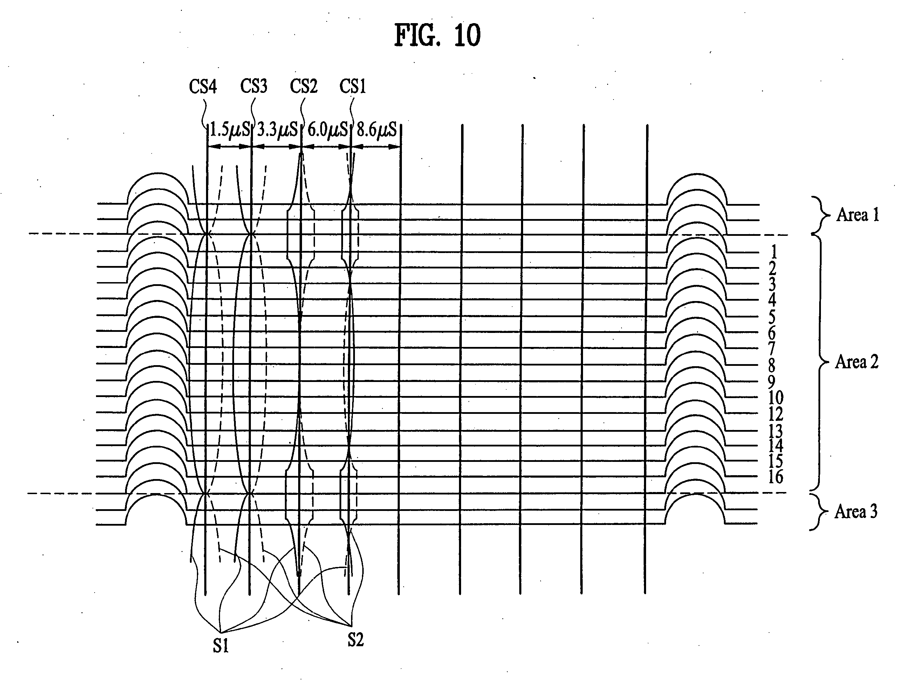

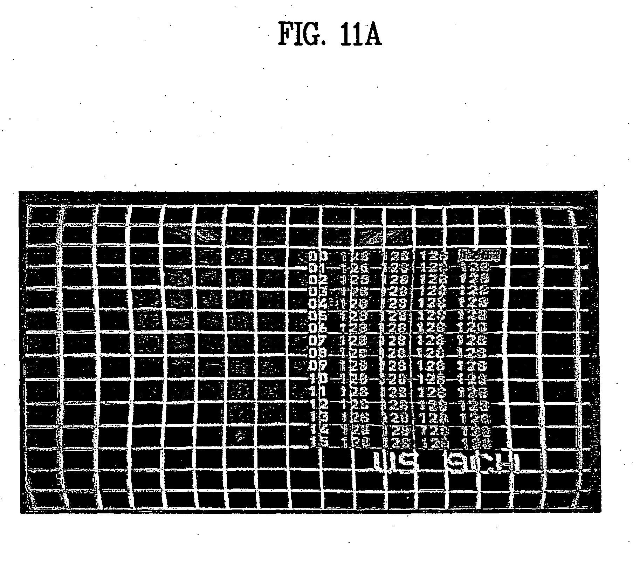

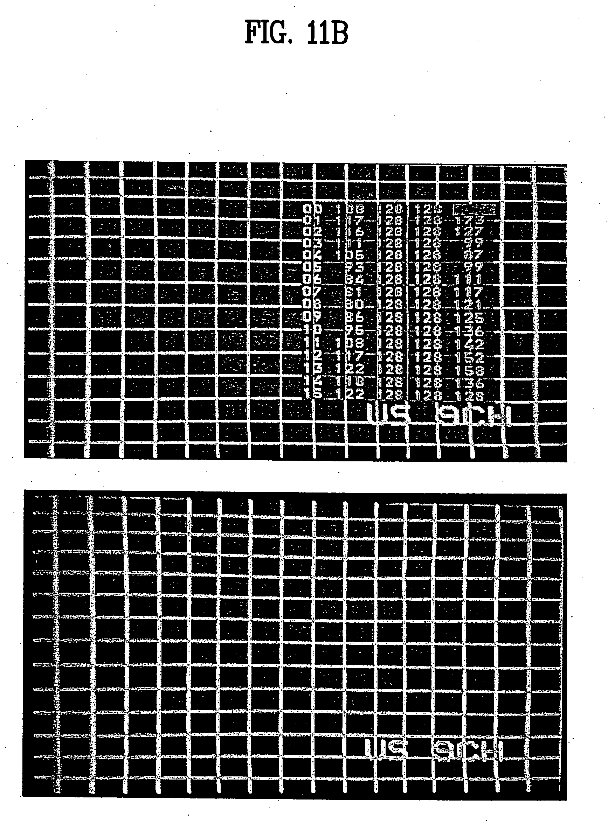

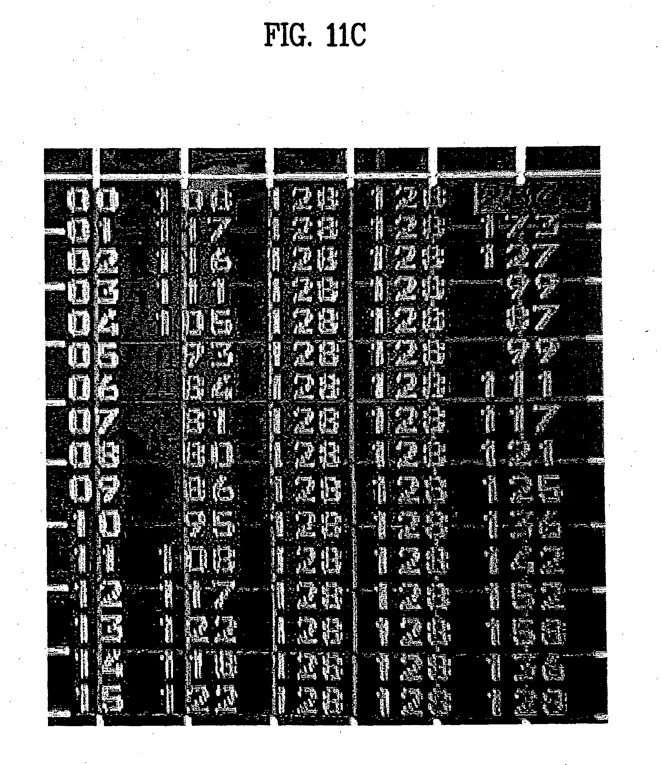

FIGS. 10 and 11 illustrate a correcting of linearity distortion and pincushion distortion using sixteen selected points according to the method of the present invention, with FIG. 11A showing actual pincushion effects on an image, i.e., prior to correcting using the sixteen selected points, and FIG. 11B showing the pincushion conditions achieved after correction. FIG. 11C specifically details the on-screen display (OSD) data for the correction shown in FIG. 11B.

Referring to FIG. 10, each of the final drive signals CS1-CS4, which are output from the field-programmable gate array 30 after distortion is corrected, appear as a straight line because the distortion has been corrected. Waveforms S1 are drive signals actually appearing on an image without being corrected and have distorted forms, and waveforms S2 are correction waveforms output to the adder 38 from an interpolator 37. The final drive signals CS1-CS4 are separated by intervals of 1.5$\mu$s, 3.3$\mu$s, 6.0$\mu$s, and 8.6$\mu$s, respectively. Here, the image is divided into three areas, namely, Areas 1, 2, and 3, and three points (or horizontal lines) are selected for the distortion correction from Areas 1 and 3, while sixteen points are selected from Area 2. In other words, each of the drive signals, which is a horizontal pulse, obtains the correction waveform from points between the respective points through an interpolation by way of a sequential varying of the sixteen points in Area 2. Hence, the vertical (column) lines of the image can be corrected, i.e., to remove distortion, such that for each of Areas 1 and 3, the interpolation is carried out by moving three points only, in the same manner, to find the correction waveforms and to correct the vertical lines.

By adopting the apparatus and method of the present invention, the turn-on time of the transistors can be precisely controlled using programmable logic means. In addition, the need for substrate adjustments, which are often inaccurate, can be obviated using an interpolation scheme, thereby preventing adjustment errors.

It will be apparent to those skilled in the art that various modifications can be made in the present invention without departing from the scope of the invention. Thus, it is intended that the present invention covers such modifications provided they come within the scope of the claims.

**Claims**

1. An apparatus for correcting image distortion, comprising:

    a memory arranged to store at least one interpolation constant;
    a device arranged to output at least one drive signal, so to correct distortion in an image, by interpolating an input image signal using the at least one interpolation constant; and
    at least one switching device arranged to switch a drive control of a corresponding area of the image in response to a corresponding drive signal.

2. The apparatus of claim 1, wherein the at least one interpolation constant is a linear interpolation constant.

3. The apparatus of claim 1, wherein the at least one interpolation constant is a Hermit interpolation constant.

4. The apparatus of claim 1, wherein the image is divided into a plurality of areas, wherein the at least one drive signal is a number of pulse waveforms equal in number to the area divisions, and wherein said at least one switching device is a number of transistors equal in number to the area divisions.

5. The apparatus of claim 1, wherein each of the at least one drive signal is arranged to be output from said drive signal outputting device via a photo-coupler.

6. The apparatus of claim 1, wherein said memory is an EEPROM.

7. An apparatus for correcting image distortion, comprising:

a first memory arranged to store at least one interpolation constant;
a control unit arranged to generate a predetermined number of image point signals;
device arranged to output at least one drive signal, so as to correct distortion in an image point, by interpolating the input image point signals using the at least one interpolation constant; and
at least one switching device arranged to switch a drive control of a corresponding area of the image in response to a corresponding drive signal.

8. The apparatus of claim 7, wherein the distortion is at least one of pin-cushioning and non-linearity.

9. The apparatus of claim 7, wherein the image point signals are line signals selected for correcting the image distortion.

10. The apparatus of claim 9, wherein the line signals are selected according to an area of the image.

11. The apparatus of claim 10, wherein the area of the image corresponds to one selection of three line signals and sixteen line signals.

12. The apparatus of claim 7, wherein said drive signal outputting device is a field-programmable gate array that is an ASIC-programmable logic means.

13. The apparatus of claim 7, said drive signal outputting device comprising:

a slave unit arranged to communicate with said control unit to input the image point signals;
a master unit arranged to perform read/write operations with respect to the first memory;
a first write controller arranged to control a write of data from the slave and master units;
a second memory arranged to store the data from said slave unit and said master unit in a table form by a control of said first write controller;
a second write controller arranged to control said master unit and to control a write operation for data from said second memory;
a timing generator and interpolator controller arranged to generate a timing signal using input vertical and horizontal sync signals and to control the interpolation of the input image point signals;
an interpolator arranged to output at least one correction signal by performing interpolation on the point signals output by said timing generator and interpolator controller based on the interpolation constants; and
an adder arranged to output distortion-corrected drive signals by summing the at least one correction signal and the point signals.

14. The apparatus of claim 13, wherein the second memory is one of a RAM and a ROM.

15. The apparatus of claim 13, wherein the interpolator is an arithmetic logic unit.

16. The apparatus of claim 13, wherein each of said first and second write controllers are RAM write controllers.

17. A method of correcting image distortion in a display device provided with memory, comprising:

calculating at least one interpolation constant required for interpolation;
storing in memory the at least one interpolation constant; and
generating at least one drive signal, to correct distortion in an image, by interpolating at least one input point signal of the image using the at least one interpolation constant.

18. The method of claim 17, wherein each of the drive signals is used in driving a switching device for a corresponding area of the image.

19. The method of claim 17, wherein the image point signals are line signals selected for correcting the image distortion.

20. The method of claim 19, wherein the line signals are selected according to an area of the image.

21. The method of claim 20, wherein the area of the image corresponds to one selection of three line signals and sixteen line signals.

22. The method of claim 17, wherein the at least one interpolation constant is a linear interpolation constant.

23. The method of claim 17, wherein the at least one interpolation constant is a Hermit interpolation constant.

24. The method of claim 17, wherein the image is divided into a plurality of areas and wherein each drive signal is a pulse waveform.

# FIG. 1A
# Related Art

60cm

General 32" TV

# FIG. 1B
# Related Art

39cm

32" super slim TV

# FIG. 1C
# Related Art

Defection angle 110° (general TV)

Defection angle 125° (super slim TV)

FIG. 2
Related Art

a b c d e f ...

EP 1 761 039 A2

# FIG. 3
# Related Art

```
┌──────────────┐
│  Deflection  │ ～ 1
│  controller  │
└──────┬───────┘
       │
       │                    3              4             5
       ▼          2         │              │             │
┌──────────────┐  ┌──────────────┐  ┌──────────────┐  ┌──────────────┐
│  Deflection  │→ │    Inner     │→ │     DY       │→ │     CRT      │
│   circuit    │  │  correction  │  │              │  │              │
│              │  │   circuit    │  │              │  │              │
└──────────────┘  └──────────────┘  └──────────────┘  └──────────────┘
```

## FIG. 4A
## Related Art

transistor-on waveform

reference waveform

## FIG. 4B
## Related Art

transistor-on waveform

reference waveform

## FIG. 4C
## Related Art

transistor-on waveform

reference waveform

## FIG. 4D
## Related Art

transistor-on waveform

reference waveform

## FIG. 4E
## Related Art

CS1

CS2

CS3

CS4

# FIG. 5

EP 1 761 039 A2

# FIG. 6

EP 1 761 039 A2

## FIG. 7A

## FIG. 7B

## FIG. 7C

## FIG. 7D

# FIG. 8

FIG. 9

EP 1 761 039 A2

# FIG. 10

EP 1 761 039 A2

# FIG. 11A

# FIG. 11B

# FIG. 11C